# NEUE EUROPÄISCHE PATENTSCHRIFT

(11) **EP 2 786 472 B2**
(45) Veröffentlichungstag und Bekanntmachung des Hinweises auf die Entscheidung über den Einspruch: **01.09.2021**
(45) Hinweis auf die Patenterteilung: 14.02.2018
(21) Anmeldenummer: 12805975.5
(22) Anmeldetag: 03.12.2012
(51) Int. Cl.: H02K 55/02

(54) **ELEKTRISCHE MASCHINE**
ELECTRICAL MACHINE
MACHINE ÉLECTRIQUE

(30) Priorität: 02.12.2011 DE 102011056008
(43) Veröffentlichungstag der Anmeldung: 08.10.2014
(73) Patentinhaber: Oswald Elektromotoren Gmbh, 63897 Miltenberg (DE)
(72) Erfinder: OSWALD, Bernhard, 63897 Miltenberg (DE); OSWALD, Johannes, 63897 Miltenberg (DE)
(74) Vertreter: Habermann Intellectual Property Partnerschaft von Patentanwälten mbB
(86) Internationale Anmeldenummer: PCT/EP2012/074205
(87) Internationale Veröffentlichungsnummer: WO 2013/079715

(56) Entgegenhaltungen:
- EP-A1- 1 959 548
- WO-A1-2009/068844
- WO-A2-2009/045038

## Beschreibung

Die Erfindung betrifft eine elektrische Maschine mit einem Stator, mit einem Rotor und mit mehreren Maschinenspulen.

Solche elektrischen Maschinen, bei denen der Rotor relativ zu einem feststehenden Stator eine Drehbewegung ausführt, werden in unterschiedlichsten Ausführungsformen in einer Vielzahl von Anwendungsgebieten sowohl als Motoren als auch als Generatoren eingesetzt. Beispielsweise können die elektrischen Maschinen mit Drehstrom betrieben und als Asynchron- oder Synchronmaschine ausgeführt sein.

In Abhängigkeit von der vorgesehenen Leistung der elektrischen Maschine kann die elektrische Maschine notwendigerweise ein erhebliches Gewicht und Volumen aufweisen, wodurch die Herstellung und Montage der elektrischen Maschine erschwert wird. Gegebenenfalls müssen speziell an die jeweilige elektrische Maschine angepasste Fundamente oder dergleichen bereitgestellt werden. Dies hat erhebliche Kosten zur Folge.

Für einige Anwendungen werden zudem elektrische Maschinen mit sehr kurzen Anregelzeiten bzw. einem schnellen, dynamischen Betriebsverhalten benötigt. Beispielsweise werden solche elektrischen Maschinen als Belastungseinrichtungen für hochdynamische Motorenprüfstände eingesetzt. Herkömmliche elektrische Maschinen können die steigenden Anforderungen in diesem Bereich häufig nicht oder nur unzureichend erfüllen. Aufgabe der Erfindung ist es daher, bekannte elektrische Maschinen dahingehend weiter zu entwickeln, dass die Leistungsdichte erhöht, das Volumen und das Gewicht der elektrischen Maschine reduziert und das dynamische Betriebsverhalten verbessert wird.

Diese Aufgabe wird erfindungsgemäß durch die Merkmale des Anspruchs 1 gelöst.

Die EP 1 959 548 A1 offenbart eine elektrische Maschine, die eine Kühleinrichtung aufweist, die dazu geeignet ist, ein supraleitendes Material mindestens bis unter eine Sprungtemperatur abzukühlen, wobei die Wicklungen aus supraleitendem Material bestehen und mit der Kühleinrichtung in Wirkverbindung stehen. In der WO 2004/073144 A1 wird eine elektrische Maschine beschrieben, wobei die Wicklungen in den einzelnen Wicklungen zugeordneten Wicklungskryostaten angeordnet sind und unabhängig voneinander gekühlt werden. Das für die Kühlung erforderliche Kühlmittel wird über zwei Kühlmittelanschlüsse durch den jeweiligen Wicklungskryostaten geleitet. Supraleitende Materialien sind Materialien, deren elektrischer Widerstand bei Unterschreiten einer materialspezifischen Sprungtemperatur sprunghaft auf Null abfällt. Werden die bis unter die Sprungtemperatur abgekühlten Wicklungen der Maschinenspulen beispielsweise mit einem Wechselstrom beaufschlagt, tritt nur ein geringer Energieverlust ein, der gegenüber einem Ohm'schen Widerstand nur sehr gering ist. Dadurch können auch mit vergleichsweise kleinen Maschinen starke elektromagnetische Felder erzeugt werden, wodurch die Leistungsdichte der elektrischen Maschinen erheblich steigt und eine hohe Dynamik ermöglicht wird.

Die elektrische Maschine mit einer supraleitenden Wicklung kann beispielsweise mit einem dreiphasigen Wechselstrom betrieben werden. Es ist aber auch möglich, die elektrische Maschine mit einem höherphasigen Wechselstrom zu betreiben. Die elektrische Maschine kann dabei sowohl in einem niedrigeren Drehzahlbereich und gleichzeitig hohem Drehmoment als auch in einem sogenannten Feldschwächungsbereich bis zu hohen Geschwindigkeiten bei einer konstanten Leistung betrieben werden.

Als supraleitendes Material kommen beispielsweise Hochtemperatursupraleiter in Frage, deren Sprungtemperatur bereits bei einer Temperatur von minus 140 Grad Celsius erreicht sein kann. Für die Wicklung der Maschinenspulen können supraleitende Materialien beispielsweise in Band- oder Drahtform eingesetzt werden. Als supraleitende Materialien kommen unter anderem die Zusammensetzungen YBCO (YBCO coated conductor) oder BSCCO in Frage, die bei ausreichend tiefen Temperaturen eine außerordentlich hohe Stromdichte aufweisen können.

Die Maschinenspulen können sowohl am oder im Rotor als auch am oder im Stator angeordnet sein. Der Stator kann außerhalb (als Außenläufer) oder innerhalb des Rotors (als Innenläufer) angeordnet sein
Um an dem Stator angeordnete Maschinenspulen auf die Sprungtemperatur abkühlen zu können ist es bekannt, dass die Maschinenspulen an dem Stator angeordnet sind, dass der Stator und die Maschinenspulen innerhalb eines Statorkryostaten angeordnet sind und dass der Statorkryostat mit der Kühleinrichtung in Wirkverbindung steht. Innerhalb des Statorkryostaten wird also der gesamte Stator mitsamt den an dem Stator angeordneten Maschinenspulen unter die jeweilige Sprungtemperatur der Wicklungen abgekühlt. Dabei können verschiedene Kühlprinzipien eingesetzt werden. Beispielsweise kann es sich bei dem Statorkryostaten um einen Badkryostaten handeln, bei denen der Stator und die zu kühlenden Maschinenspulen von einer Kryoflüssigkeit, beispielsweise von flüssigem Stickstoff umgeben sind. Es ist aber auch möglich, dass es sich bei dem Statorkryostaten um einen Refrigeratorkryostaten handelt, bei dem die Kühlung durch einen sogenannten Cryo-Cooler erfolgt.

Bei dieser Anordnung werden neben den auf Sprungtemperatur abzukühlenden Wicklungen der Maschinenspulen auch die zur magnetischen Flussführung benötigten Elemente, beispielsweise innerhalb der Wicklung angeordnete Eisenkerne gekühlt. Der Rotor und dessen Lagereinrichtungen können im warmen Bereich liegen und nur der Stator mit daran angeordneten Wicklungen der Maschinenspulen gekühlt werden.

Um die benötigte Kühlleistung zur Abkühlung der Wicklungen unter die Sprungtemperatur zu reduzieren, ist erfindungsgemäß vorgesehen, dass mindestens eine Maschinenspule innerhalb eines Wicklungskryostaten angeordnet ist und der Wicklungskryostat mit der Kühleinrichtung in Wirkverbindung steht. Auf diese Weise muss nicht der gesamte Statorraum abgekühlt werden, sondern lediglich ein wesentlich kleinerer Bereich um die Maschinenspulen.

Die zur Abkühlung benötigte Kühlleistung kann dadurch weiter reduziert werden, dass der Wicklungskryostat torusförmig oder race-track-förmig ausgestaltet ist. Innerhalb des von dem Wicklungskryostaten gebildeten Torus kann ein Spulenkern angeordnet werden. Zweckmäßigerweise weist der Wicklungskryostat eine an eine Wicklung der Maschinenspule angepasste Ausnehmung zur Aufnahme des Spulenkerns auf. Auf diese Weise werden lediglich die Wicklungen bis zur Sprungtemperatur abgekühlt, während alle weiteren Elemente, beispielsweise die zur magnetischen Flussführung benötigten Spulenkerne, bei Raumtemperatur betrieben werden.

Ebenso können innerhalb eines Wicklungskryostaten angeordnete und mit dem Rotor verbundene Maschinenspulen auf diese Weise gekühlt werden. Dabei wird der Rotor bei Raumtemperatur betrieben.

Um Kühlleistung von der Kühleinrichtung auf den Wicklungskryostaten übertragen zu können, ist erfindungsgemäß vorgesehen, dass der Wicklungskryostat zwei Kühlmittelanschlüsse aufweist, die beispielsweise an den gegenüber liegenden Seiten des Wicklungskryostaten angeordnet sind. Über diese Leitungen kann dann ein geeignetes Kryofluid, beispielsweise flüssiger oder gasförmiger Stickstoff, in den Wicklungskryostat geleitet werden.

Zur einfacheren Versorgung der mehreren Wicklungskryostaten mit dem Kryofluid ist erfindungsgemäß vorgesehen, dass die elektrische Maschine zwei parallel zueinander bezüglich einer Rotationsachse der elektrischen Maschine koaxial angeordnete Anschlussringe mit an die Kühlmittelanschlüsse angepassten Kühlmittelanschlussaufnahmen aufweist. Die Wicklungskryostaten können einfach mit den jeweiligen Kühlmittelanschlüssen in den daran angepassten Kühlmittelanschlussaufnahmen der Anschlussringe angeordnet werden.

Um die zur Kühlung benötigte Kühlleistung zu verringern ist erfindungsgemäß vorgesehen, dass der Wicklungskryostat innerhalb eines thermischen Isolators angeordnet ist. Beispielsweise kann es sich bei dem thermischen Isolator um eine Strahlung abschirmende Folie oder um eine andere Spiegelfläche handeln.

Es ist darüber hinaus möglich und erfindungsgemäß vorgesehen, dass der thermische Isolator Bereiche aufweist, in denen ein Vakuum erzeugbar ist. In diesem Fall ist es erforderlich, dass der Wicklungskryostat vakuumdicht von dem thermischen Isolator getrennt sind. Es ist auch möglich, dass in dem gesamten thermischen Isolator ein Vakuum herrscht.

Um die in dem thermischen Isolator durch das von den Maschinenspulen hervorgerufene Wechselfeld erzeugten Wirbelströme zu verringern, ist erfindungsgemäß vorgesehen, dass der thermische Isolator aus einem Material besteht, das einen hohen elektrischen Widerstand aufweist. Beispielsweise kann der thermische Isolator aus einem Kunststoff mit entsprechend hohem elektrischen Widerstand bestehen.

Bei einer besonders vorteilhaften Ausgestaltung des Erfindungsgedankens ist vorgesehen, dass der Wicklungskryostat mit einem kryogenen Fluid befüllbar ist. Bei dem kryogenen Fluid kann es sich um eine kryogene Flüssigkeit oder um gekühltes Gas handeln. Als kryogene Flüssigkeit kommen beispielsweise flüssiger Stickstoff, flüssiges Neon, flüssiger Wasserstoff oder flüssiges Helium in Frage.

Erfindungsgemäß ist vorgesehen, dass die Kühleinrichtung einen Kryokühler aufweist. Bei dem Kryokühler handelt es sich um einen geeigneten Wärmetauscher, der von dem Kryofluid aufgenommene Wärme abführt. In diesem Fall stellen die Kühleinrichtung und die jeweiligen Kryostaten zweckmäßigerweise einen geschlossenen Kreislauf dar, der von entsprechenden zwischen der Kühleinrichtung und der Kryostaten angeordnete Schlauch- oder Rohrverbindungen gebildet wird. Zur Umwälzung des Kryofluids innerhalb des geschlossenen Kühlkreislaufs kann eine entsprechende Kühlmittelpumpe vorgesehen sein.

Es ist aber auch möglich, die Kühleinrichtung und die Kryostaten in einem offenen Kühlkreislauf zu betreiben. Vorteilhafterweise ist vorgesehen, dass die Kühleinrichtung eine Regeleinrichtung aufweist, die dazu geeignet ist, eine Kühlleistung an eine Maschinenlast adaptiv anzupassen. Auf diese Weise können beispielsweise auch kurzfristig auftretende höhere Maschinenlasten von der elektrischen Maschine aufgenommen werden, ohne dass die Temperatur der Wicklungen die Sprungtemperatur erreicht und die Wicklungen die supraleitende Eigenschaft verlieren. Die Regeleinrichtung kann beispielsweise ein in dem Kühlkreislauf angeordnetes Regelventil, einen Temperatursensor im Rücklauf des Kühlkreislaufs und eine digital-elektronische Berechnungseinrichtung aufweisen, wobei die Regeleinrichtung an eine Regelung der gemessenen Rücklauftemperatur mit dem Regelventil angepasst ist.

Bei einer besonders vorteilhaften Ausgestaltung der Erfindung ist vorgesehen, dass die elektrische Maschine eine steuerbare oder regelbare Versorgungseinrichtung zur Steuerung oder Regelung einer Maschinendrehzahl aufweist. Bei der steuerbaren oder regelbaren Versorgungseinrichtung kann es sich beispielsweise um einen Frequenzumrichter handeln.

Weitere vorteilhafte Ausgestaltungen des Erfindungsgedankens werden in der Zeichnung anhand von exemplarischen Ausführungsbeispielen erläutert. Es zeigt:
Figur 1 eine schematische Darstellung einer bekannten elektrischen Maschine mit innerhalb eines Statorkryostaten angeordneten supraleitenden Wicklungen,
Figur 2 eine schematisch dargestellte Explosionszeichnung eines Wicklungskryostaten,
Figur 3 eine schematisch dargestellte Explosionszeichnung eines Wicklungskryostaten und eines Anschlussrings,
Figur 4 eine schematisch dargestellte Explosionszeichnung einer innerhalb eines thermischen Isolators angeordneten Stators, an dem mehrere Wicklungskryostaten angeordnete sind.

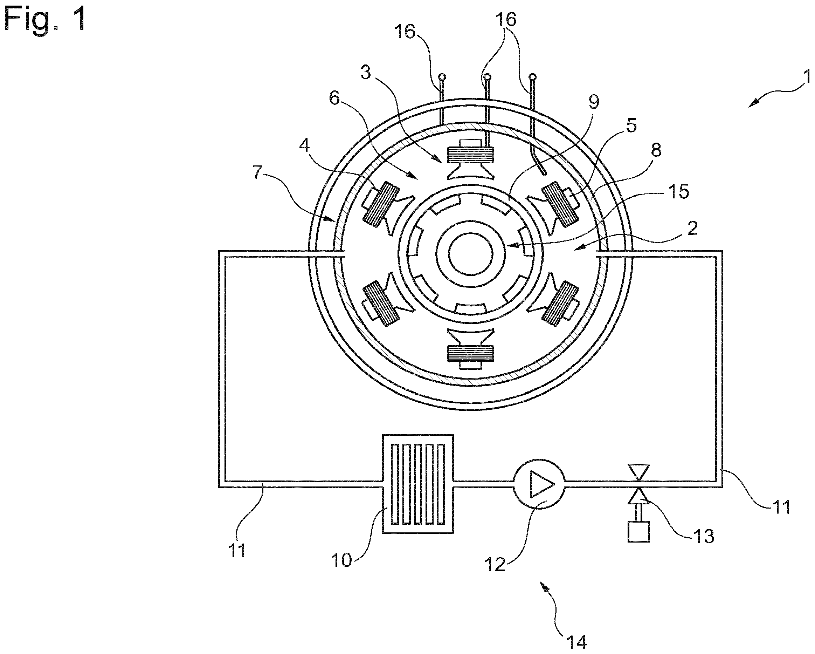

Figur 1 zeigt eine schematische Darstellung einer bekannten elektrischen Maschine 1 mit einem Stator 2, an dem mehrere Maschinenspulen 3 angeordnet sind. Wicklungen 4 der Maschinenspulen 3 bestehen aus einem supraleitenden Material. Die Maschinenspulen 3 weisen Spulenkerne 5 auf und sind innerhalb eines Statorkryostaten 6 angeordnet. Der Statorkryostat 6 ist innerhalb eines thermischen Isolators 7 angeordnet, der von zwei zylindrischen und koaxial zueinander angeordneten Vakuumröhren 8, 9 und nicht dargestellten Vakuumröhrendeckeln gebildet ist.

In der Zeichnung ist zur Veranschaulichung jeweils nur eine Maschinenspule 3, eine Wicklung 4 und ein Spulenkern 5 mit einem zugeordneten Bezugszeichen versehen.

Der Statorkryostat 6 ist mit einem Kryokühler 10 über Rohrleitungen 11 verbunden. Ein kryogenes Fluid wird innerhalb dieses von dem Statorkryostaten 6, dem Kryokühler 10, den Rohrleitungen 11, einer Kühlmittelpumpe 12 und einer Regeleinrichtung 13 gebildeten Kühlkreislauf mit Hilfe der Kühlmittelpumpe 12 innerhalb des Kühlkreislaufs umgewälzt. Mit der Regeleinrichtung 13 wird die Kühlmitteldurchflussmenge gesteuert. Der Kryokühler 10, die Kühlmittelpumpe 12 und die Regeleinrichtung 13 bilden eine Kühleinrichtung 14.

Im Inneren der elektrischen Maschine 1 befindet sich ein Rotor 15. Die Wicklungen 4 der Maschinenspulen 3 werden über elektrische Anschlüsse 16 über einen nicht dargestellten Frequenzumrichter mit einem Drehstrom versorgt.

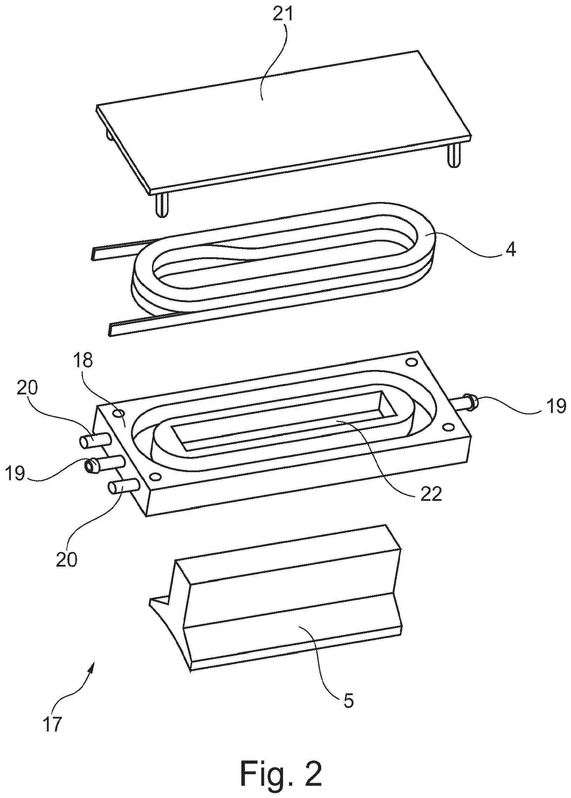

In Figur 2 ist schematisch eine Explosionszeichnung eines erfindungsgemäßen Wicklungskryostaten 17 mit einem thermisch isolierten Kryostatgehäuse 18 dargestellt.

Innerhalb des Kryostatgehäuses 18 kann eine supraleitende Wicklung 4 angeordnet werden. Bei der hier dargestellten supraleitenden Wicklung handelt es sich um eine "Double Pancake Wicklung". Es könnte natürlich auch eine "Single pancake Spule" verwendet werden.

Der Wicklungskryostat 17 kann mit einem mit dem Kryostatgehäuse 18 verbindbaren Wicklungskryostatdeckel 21 verschlossen werden. An dem Kryostatgehäuse 18 sind Kühlmittelanschlüsse 19 und Stromanschlusselemente 20 angeordnet. Der Wicklungskryostat 17 weist eine an den Spulenkern 5 angepasste Ausnehmung 22 auf.

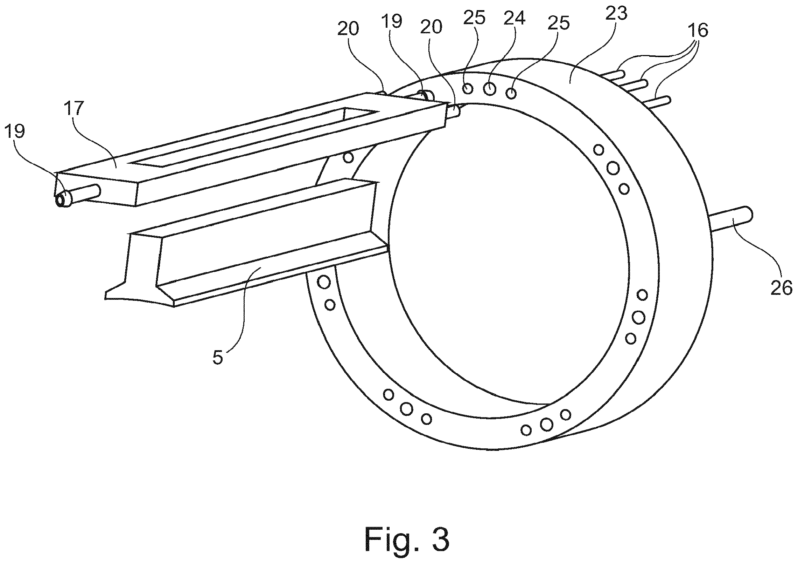

Figur 3 zeigt eine schematisch dargestellte Explosionszeichnung eines Anschlussrings 23 und eines Wicklungskryostaten 17, in dem ein Spulenkern 5 angeordnet werden kann. Der Kühlmittelanschluss 19 des Wicklungskryostaten 17 kann mit einer an den Kühlmittelanschluss 19 angepassten Kühlmittelanschlussaufnahme 24 des Anschlussrings 23 verbunden werden. Die Stromanschlusselemente 20 des Wicklungskryostaten 17 sind mit Stromaufnahmeelementen 25 des Anschlussrings 23 verbindbar. Der Anschlussring 23 weist elektrische Anschlüsse 16 und einen mit einem nicht dargestellten Kühlmittelkreislauf verbindbaren Anschluss 26 auf.

Der Übersichtlichkeit halber ist in dieser Darstellung lediglich ein Anschlussring 23 und ein Wicklungskryostat 17 dargestellt. Auf die Darstellung weiterer Elemente der zugehörigen elektrischen Maschine wurde verzichtet.

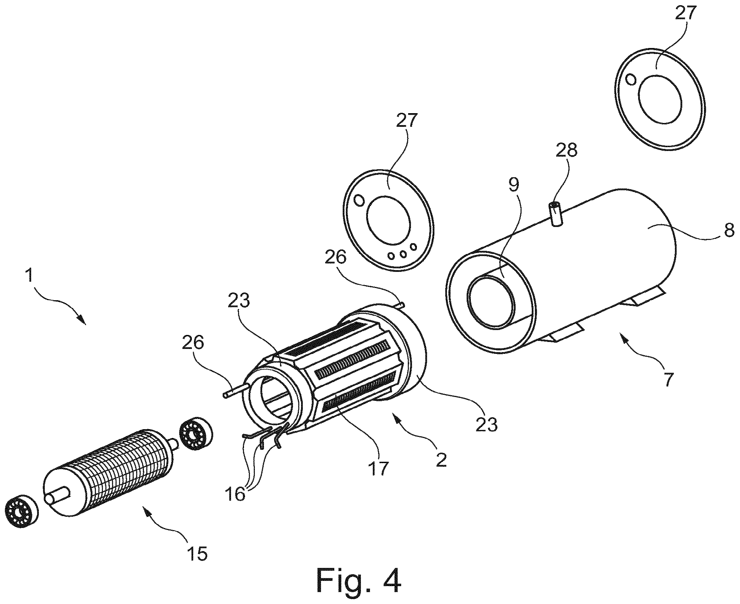

Figur 4 zeigt eine schematisch dargestellte Explosionszeichnung einer elektrischen Maschine 1. Die elektrische Maschine 1 weist einen Stator 2 und einen Rotor 15 auf. Der Stator 2 weist zwei parallel zueinander und koaxial zu einer Rotationsachse der elektrischen Maschine 1 angeordnete Anschlussringe 23 auf. An den Anschlussringen 23 sind Wicklungskryostaten 17 angeordnet. Der Stator 2 kann innerhalb eines thermischen Isolators 7 angeordnet werden. Der thermische Isolator 7 besteht aus einer ersten Vakuumröhre 8 und einem innerhalb der ersten Vakuumröhre 7 koaxial angeordneten zweiten Vakuumröhre 9. Die erste Vakuumröhre 8 und die zweite Vakuumröhre 9 können mit ringförmigen Vakuumröhrendeckeln 27 vakuumdicht verschlossen werden. Mit Hilfe eine Vakuumanschlusses 28 kann über eine nicht dargestellte Vakuumpumpe ein Vakuum innerhalb des von der ersten Vakuumröhre 8, der zweiten Vakuumröhre 9 und den Vakuumröhrendeckeln 27 gebildeten thermischen Isolators 7 erzeugt werden.

Bei einer anderen konstruktiven Umsetzung könnte in einem Luftspalt der elektrischen Maschine 1 nur eine Vakuumröhre erforderlich sein, die nicht gesondert gekühlt werden muss und deren Temperatur der Umgebungstemperatur, bzw. der Raumtemperatur entsprechen kann.

## Patentansprüche

1. Elektrische Maschine (1) mit einem Stator (2), mit einem Rotor (15) und mit mehreren Maschinenspulen (3), wobei die Maschinenspulen (3) am oder im Stator (2) angeordnet sind, wobei die elektrische Maschine (1) eine Kühleinrichtung (14) aufweist, die dazu geeignet ist, ein supraleitendes Material mindestens bis unter eine Sprungtemperatur abzukühlen, wobei eine Wicklung (4) mindestens einer Maschinenspule (3) aus dem supraleitenden Material besteht und wobei die Wicklung (4) mit der Kühleinrichtung (14) in Wirkverbindung steht, wobei die mindestens eine Maschinenspule (3) innerhalb eines Wicklungskryostaten (17) angeordnet ist und der Wicklungskryostat (17) mit der Kühleinrichtung (14) in Wirkverbindung steht, sodass nicht ein gesamter Statorraum abgekühlt werden muss, sondern lediglich ein wesentlich kleinerer Bereich um die Maschinenspulen (3), wobei der Wicklungskryostat (17) zwei Kühlmittelanschlüsse (19) aufweist, **dadurch gekennzeichnet, dass** die elektrische Maschine (1) zwei parallel zueinander und bezüglich einer Rotationsachse der elektrischen Maschine (1) koaxial angeordnete Anschlussringe (23) mit an die Kühlmittelanschlüsse (19) angepassten Kühlmittelanschlussaufnahmen (24) aufweist.

2. Elektrische Maschine (1) gemäß Anspruch 1, **dadurch gekennzeichnet, dass** der Wicklungskryostat (17) torusförmig ausgestaltet ist.

3. Elektrische Maschine (1) gemäß einem der voranstehenden Ansprüche, **dadurch gekennzeichnet, dass** der Wicklungskryostat (17) an gegenüberliegenden Seiten jeweils einen Kühlmittelanschluss (19) aufweist.

4. Elektrische Maschine (1) gemäß einem der voranstehenden Ansprüche, **dadurch gekennzeichnet, dass** der Wicklungskryostat (17) innerhalb eines thermischen Isolators (7) angeordnet ist.

5. Elektrische Maschine (1) gemäß Anspruch 4, **dadurch gekennzeichnet, dass** der thermischen Isolator (7) Bereiche aufweist, in denen ein Vakuum erzeugbar ist.

6. Elektrische Maschine (1) gemäß Anspruch 4 oder Anspruch 5, **dadurch gekennzeichnet, dass** der thermische Isolator (7) aus einem Material besteht, das einen hohen elektrischen Widerstand aufweist.

7. Elektrische Maschine (1) gemäß einem der voranstehenden Ansprüche, **dadurch gekennzeichnet, dass** der Wicklungskryostat (17) mit einem kryogenen Fluid befüllbar ist.

8. Elektrische Maschine (1) gemäß einem der voranstehenden Ansprüche, **dadurch gekennzeichnet, dass** die Kühleinrichtung (14) einen Kryokühler (10) aufweist.

9. Elektrische Maschine (1) gemäß einem der voranstehenden Ansprüche, **dadurch gekennzeichnet, dass** die Kühleinrichtung (14) eine Regeleinrichtung (13) aufweist, die dazu geeignet ist, eine Kühlleistung an eine Maschinenlast adaptiv anzupassen.

10. Elektrische Maschine (1) gemäß einem der voranstehenden Ansprüche, **dadurch gekennzeichnet, dass** die elektrische Maschine (1) eine steuerbare oder regelbare Versorgungseinrichtung zur Steuerung oder Regelung einer Maschinendrehzahl aufweist.

## Claims

1. Electrical machine (1) having a stator (2), a rotor (15) and multiple machine coils (3), wherein the machine coils (3) are arranged on or in the stator (2), wherein the electrical machine (1) comprises a cooling device (14) which is suitable to cool a superconductive material at least to below a transition temperature, wherein a winding (4) of at least one machine coil (3) consists of the superconductive material and wherein the winding (4) is operatively connected to the cooling device (14), wherein the at least one machine coil (3) is arranged within a winding cryostat (17) and the winding cryostat (17) is operatively connected to the cooling device (14) so that not an entire stator chamber has to be cooled but only a substantially smaller region around the machine coils (3), wherein the winding cryostat (17) comprises two coolant ports (19), **characterized in that** the electrical machine (1) comprises two connection rings (23) arranged in parallel to one another and coaxially with respect to a rotational axis of the electrical machine (1), which have coolant ports receptacles (24) adapted to the coolant ports (19).

2. Electrical machine (1) according to claim 1, **characterized in that** the winding cryostat (17) is configured in a toroidal shape.

3. Electrical machine (1) according to one of the preceding claims, **characterized in that** the winding cryostat (17) comprises in each case one coolant port (19) on opposite sides.

4. Electrical machine (1) according to one of the preceding claims, **characterized in that** the winding cryostat (17) is arranged within a thermal insulator (7).

5. Electrical machine (1) according to claim 4, **characterized in that** the thermal insulator (7) comprises regions, in which a vacuum is generatable.

6. Electrical machine (1) according to claim 4 or claim 5, **characterized in that** the thermal insulator (7) consists of a material having a high electric resistance.

7. Electrical machine (1) according to one of the preceding claims, **characterized in that** the winding cryostat (17) can be filled with a cryogenic fluid.

8. Electrical machine (1) according to one of the preceding claims, **characterized in that** the cooling device (14) comprises a cryogenic cooler (10).

9. Electrical machine (1) according to one of the preceding claims, **characterized in that** the cooling device (14) comprises a regulating unit (13) which is suitable to adaptively adjust a cooling power to a machine load.

10. Electrical machine (1) according to one of the preceding claims, **characterized in that** the electrical machine (1) comprises a controllable or regulatable supply unit for controlling or regulating a machine speed.

## Revendications

1. Machine électrique (1) comprenant un stator (2), comprenant un rotor (15) et comprenant plusieurs bobines de machine (3), les bobines de machine (3) étant disposées sur ou dans le stator (2), la machine électrique (1) présentant un dispositif de refroidissement (14) qui est apte à refroidir un matériau supraconducteur au moins jusqu'en dessous d'une température du point critique, un enroulement (4) d'au moins une bobine de machine (3) consistant en le matériau supraconducteur et l'enroulement (4) étant en liaison active avec le dispositif de refroidissement (14), l'au moins une bobine de machine (3) étant disposée à l'intérieur d'un cryostat d'enroulement (17) et le cryostat d'enroulement (17) étant en liaison active avec le dispositif de refroidissement (14) de sorte qu'il n'est pas nécessaire de refroidir tout un espace de stator mais seulement une zone nettement plus petite autour des bobines de machine (3), dans lequel le cryostat d'enroulement (17) présente deux raccords de liquide de refroidissement (19), **caractérisée en ce que** la machine électrique (1) présente deux anneaux de raccordement (23) disposés parallèlement l'un à l'autre et coaxialement par rapport à un axe de rotation de la machine électrique (1), munis de logements (24) de raccords de liquide de refroidissement adaptés aux raccords de liquide de refroidissement (19).

2. Machine électrique (1) selon la revendication 1, **caractérisée en ce que** le cryostat d'enroulement (17) est conçu de manière torique.

3. Machine électrique (1) selon l'une des revendications précédentes, **caractérisée en ce que** le cryostat d'enroulement (17) présente respectivement un raccord de liquide de refroidissement (19) sur des côtés opposés.

4. Machine électrique (1) selon l'une des revendications précédentes, **caractérisée en ce que** le cryostat d'enroulement (17) est disposé à l'intérieur d'un isolateur (7) thermique.

5. Machine électrique (1) selon la revendication 4, **caractérisée en ce que** l'isolateur thermique (7) présente des zones dans lesquelles un vide peut être généré.

6. Machine électrique (1) selon la revendication 4 ou la revendication 5, **caractérisée en ce que** l'isolateur thermique (7) consiste en un matériau qui présente une résistance électrique élevée.

7. Machine électrique (1) selon l'une quelconque des revendications précédentes, **caractérisée en ce que** le cryostat d'enroulement (17) peut être rempli avec un fluide cryogène.

8. Machine électrique (1) selon l'une quelconque des revendications précédentes, **caractérisée en ce que** le dispositif de refroidissement (14) présente un cryo-refroidisseur (10).

9. Machine électrique (1) selon l'une quelconque des revendications précédentes, **caractérisée en ce que** le dispositif de refroidissement (14) présente un dispositif de réglage (13) qui est apte à adapter adaptivement une puissance de refroidissement à une charge de machine.

10. Machine électrique (1) selon l'une quelconque des revendications précédentes, **caractérisée en ce que** la machine électrique (1) présente un dispositif d'alimentation commandable ou réglable pour la commande ou le réglage d'une vitesse de rotation de machine.
